(19) Europäisches Patentamt
European Patent Office
Office européen des brevets

(11) **EP 1 583 402 B1**

(12) **EUROPÄISCHE PATENTSCHRIFT**

(45) Veröffentlichungstag und Bekanntmachung des Hinweises auf die Patenterteilung:
**03.08.2016  Patentblatt 2016/31**

(51) Int Cl.:
*H02M 1/42* (2007.01)     *H02M 3/28* (2006.01)
*H05B 41/28* (2006.01)    *H02M 1/00* (2006.01)

(21) Anmeldenummer: **05000692.3**

(22) Anmeldetag: **14.01.2005**

(54) **Ansteuerung von Leuchtmittel-Betriebsgeräten mit einem zentralen kaskadierten AC/DC-Konverter**

Control of lighting devices with a central AC/DC cascaded converter

Controle de dispositifs lumineux avec un convertisseur AC/DC cascadé central

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **12.03.2004   DE 102004012215**

(43) Veröffentlichungstag der Anmeldung:
**05.10.2005   Patentblatt 2005/40**

(73) Patentinhaber: **Tridonic GmbH & Co KG**
**6851 Dornbirn (AT)**

(72) Erfinder:
• **Barth, Alexander**
**6850 Dornbirn (AT)**

• **Marent, Günter**
**6780 Bartholomäberg (AT)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**EP-A2- 1 501 176      WO-A-02/30828**
**WO-A-03/102890      US-A1- 2002 171 379**
**US-A1- 2003 142 060**

Printed by Jouve, 75001 PARIS (FR)

**Beschreibung**

Die vorliegende Erfindung bezieht sich auf die Steuerung von mehreren Leuchtmittel-Betriebsgeräten ausgehend von einer zentralen Einheit.

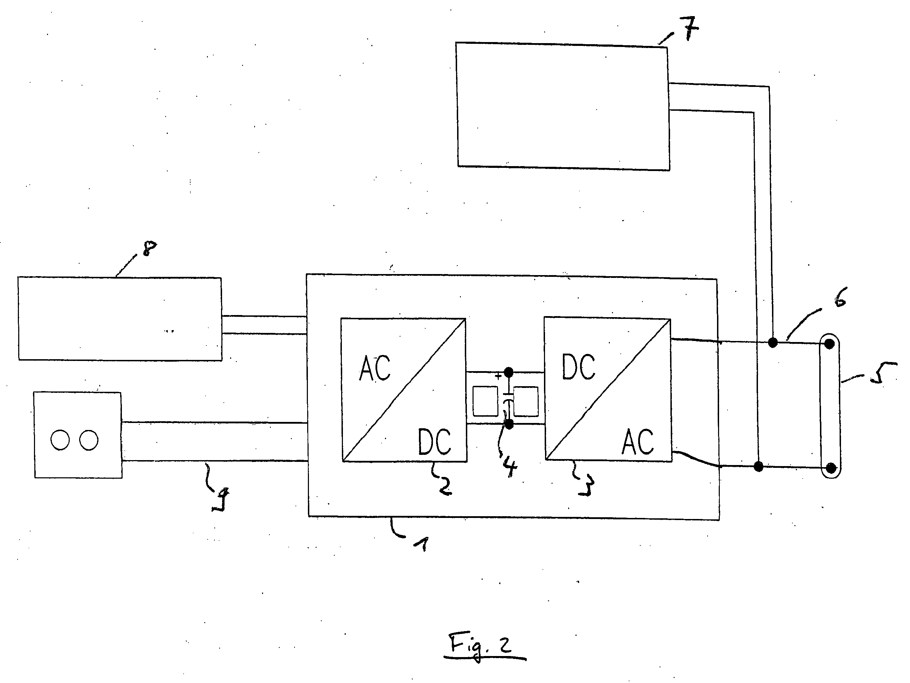

Dabei geht die Erfindung von einem in Fig. 2 schematisch dargestellten System aus. In diesem Beispiel ist das Leuchtmittel eine Gasentladungslampe 5, die von einem elektrischen Vorschaltgerät (EVG) 1 als Betriebsgerät angesteuert wird. In üblicher Weise weist dieses EVG 1 einen Gleichrichter 2 mit Leistungsfaktor-Korrekturschaltung (PFC, Power Factor Correction), einen Elektrolyt-Speicherkondensator 4 sowie einen HF-Wechselrichter 3 auf, der wiederum mittels über seinen Ausgangskreis 6 die Gasentladungslampe 5 ansteuert. Die Gleichspannung (Busspannung) liegt somit nur innerhalb des EVGs vor.

Zusätzlich kann eine Notbeleuchtungssteuerung 7 vorgesehen sein.

Der Gleichrichter 2 in dem EVG 1 wird üblicherweise mit Wechselspannung 9, beispielsweise Netzspannung, versorgt.

Gleichzeitig ist es bekannt, das EVG 1 über eine Digital- oder Analogbussteuerung 8 anzusteuern, um somit die Lampe 5 zu starten, zu dimmen oder auszuschalten. Festzuhalten ist, dass bei diesem Stand der Technik in jedem Lampenbetriebsgerät (EVG 1) ein eigener Gleichrichter 2 mit PFC-Schaltung vorgesehen ist. Eine derartige PFC-Schaltung verringert bekanntlich störende Oberwellen im Eingangsstrom. Andererseits stellen diese lokal in jedem EVG 1 vorgesehenen Wechselrichter mit PFC 2 einen beträchtlichen Kostenfaktor dar, der den Trend zu äußerst kostengünstig gefertigten EVG's stark eingrenzt.

In der in 2002 vom IEEE Institut herausgegebenen wissenschaftlichen Veröffentlichung "Analysis and Design of a Modular, High Power Converter with High Efficiency for Electrical Power Distribution Systems" beschreibt L. Heinemann einen modularen Hochleistungs-Konverter, der aus drei gängigen Konverter-Modulen besteht, wobei jedes Modul aus einem Hochfrequenz-Transformator mit hoher Isolierungsfähigkeit aufgebaut ist. Der Konverter erlaubt eine redundante Arbeitsweise beim Ausfall eines Moduls. Ferner garantiert die modulare Struktur des Konverters eine einfache und schnelle Anpassung an unterschiedliche Spannungen mit unterschiedlichen Leistungs-/Frequenz-Werten.

Die Dokumente WO03/102890 A2, US2003/0142060 A1, WO02/30828, und US2002/0171379 A1 beschreiben jeweils Verfahren zur Steuerung von Leuchtmittel-Betriebsgeräten mit PFC-Einheiten, die mittels eines DC-Ausgangskreises wenigstens ein Leuchtmittel-Betriebsgerät versorgen.

Ausgangspunkt für die vorliegende Erfindung ist es dementsprechend, eine Ansteuerung für Leuchtmittel-Betriebsgeräte vorzuschlagen, die eine kostengünstigere Fertigung von Betriebsgeräten ermöglicht.

Zentraler Punkt der Erfindung ist es dabei, dass die Einheit Gleichrichter/PFC nicht mehr lokal in jedem Betriebsgerät, sondern zentral für mehrere Betriebsgeräte vorgesehen ist. Die Verbindung zwischen dieser Zentraleinheit und den einzelnen Betriebsgeräten erfolgt erfindungsgemäß über einen DC-Ausgangskreis.

Insbesondere beschäftigt sich die vorliegende Erfindung mit dem Aspekt, einen zentralen kaskadierten AC/DC Konverter in einer Zentraleinheit einzusetzen. Dieser Konverter kann in flexibler Weise eine Vielzahl von Ausgangsspannungen zum Betreiben von Leuchtmitteln bereitstellen.

Genauer gesagt wird die oben angeführte Aufgabe durch die Merkmale der unabhängigen Ansprüche gelöst. Die abhängigen Ansprüche entwickeln den zentralen Gedanken der Erfindung in besonders vorteilhafter Weise weiter.

Gemäss einem ersten Aspekt der vorliegenden Erfindung ist ein Verfahren zur Steuerung von Leuchtmittel-Betriebsgeräten mittels einer zentralen Gleichrichter/PFC-Einheit vorgesehen. Diese Zentraleinheit versorgt mittels wenigstens eines DC-Ausgangskreises wenigstens ein Leuchtmittel-Betriebsgerät. Der DC-Ausgangskreis ermöglicht eine uni- oder bidirektionale Kommunikation zwischen der Zentraleinheit und den Leuchtmittel-Betriebsgeräten. Erfindungsgemäß weist die Zentraleinheit zur Lastanpassung des DC-Ausgangskreises einen zentralen AC/DC Konverter auf, der aus mehreren parallel geschalteten PFC-Modulen aufgebaut ist, denen ein Gleichrichter vorgeschaltet ist.

Hierfür können die PFC-Module wenigstens einen kaskadierten DC/DC Konverter speisen, der aus unterschiedlich miteinander verschaltbaren Konverter-Modulen besteht und unterschiedliche Ausgangsspannungen bereitstellen kann.

Wenigstens ein kaskadierter DC/DC-Konverter kann zur zentralen Dimmung der Leuchtmittel-Betriebsgeräte eingesetzt werden.

Dabei können wenigstens zwei Konverter-Module parallel geschaltet sein.

Die einzelne Konverter-Module können unterschiedliche Eingangsspannungen aufweisen.

Außerdem können die einzelne Konverter-Module aktiviert und deaktiviert werden können.

Dabei kann die Einschalt-Zeitdauer oder die Einschalt-Frequenz der einzelnen Konverter-Module variieren.

Die PFC-Module bzw. die Konverter-Module können identisch sein und als Steckmodule ausgeführt werden.

Wenigstens ein parallel geschaltetes Konverter-Modul und/oder wenigstens ein parallel geschaltetes PFC-Modul können als Redundant-Modul dienen.

Ein Redundant-Modul kann ein ausgefallenes Modul ersetzen. Dabei kann das Ersetzen zur Änderung der Ausgangsspannung des DC-Ausgangskreises ausgeführt werden und automatisch oder manuell erfolgen.

In der Zentraleinheit können pro Strang ein PFC-Modul und ein Sicherungs-Modul vorgesehen werden.

Gemäss einem weiteren Aspekt der vorliegenden Erfindung ist ein Steuersystem für Leuchtmittel-Betriebsgeräte vorgesehen. Das Steuersystem weist eine zentrale Gleichrichter/PFC-Einheit auf, die mittels wenigstens eines DC-Ausgangskreises wenigstens ein Leuchtmittel-Betriebsgerät versorgt. Der DC-Ausgangskreis ermöglicht eine uni- oder bidirektionale Kommunikation zwischen der Zentraleinheit und den Leuchtmittel-Betriebsgeräten. Erfindungsgemäß wird ein zentraler AC/DC Konverter aufweisend mehrere parallel geschalteten PFC-Modulen zur Lastanpassung des DC-Ausgangskreises in der Zentraleinheit, denen ein Gleichrichter vorgeschaltet ist, eingesetzt.

Weitere Merkmale, Vorteile und Eigenschaften der vorliegenden Erfindung sollen nunmehr unter Bezugnahme auf die Figuren der beigefügten Zeichnungen sowie die folgende detaillierte Beschreibung von Ausführungsbeispielen der Erfindung näher erläutert werden.

Fig. 1     zeigt eine schematische Ansicht eines erfindungsgemäßen Steuersystems für Leuchtmittel-Betriebsgeräte mit zentraler Gleichrichter/PFC-Einheit und DC-Ausgangskreis,

Fig. 2     zeigt eine aus dem Stand der Technik bekannte Betriebsmittel-Ausgestaltung für Gasentladungslampen,

Fig. 3     zeigt eine Zentraleinheit aufweisend einen aus PFC-Modulen ausgebildeten zentralen kaskadierten AC/DC Konverter und mehrere DC-Ausgangskreise gemäss einer Ausführungsform der vorliegenden Erfindung,

Fig. 4     zeigt eine Zentraleinheit aufweisend einen zentralen kaskadierten AC/DC Konverter, worin parallele PFC-Module einen kaskadierten DC/DC-Konverter speisen,

Fig. 5     zeigt einen detaillierten kaskadierten DC/DC-Konverter mit einem Ausgang,

Fig. 6     zeigt ein Zeitdiagramm der Ausgangsspannung der erfindungsgemäßen Zentraleinheit aufweisend den kaskadierten DC/DC-Konverter,

Fig. 7     zeigt ein Zeitdiagramm der Eingangsspannungen des kaskadierten DC/DC-Konverters,

Fig. 8     zeigt ein Zeitdiagramm der Steuerspannungen des kaskadierten DC/DC-Konverters,

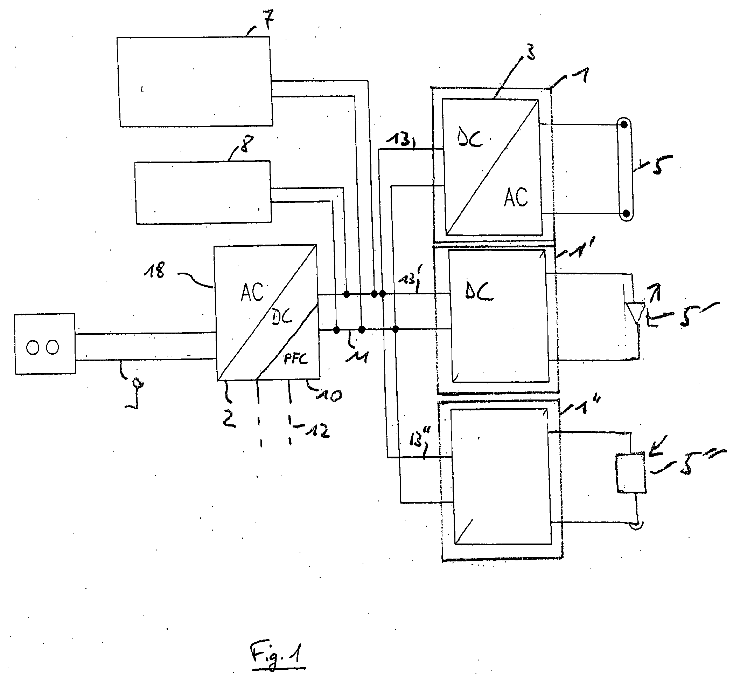

Wie in Fig. 1 gezeigt, ist eine Zentraleinheit 18, aufweisend einen Gleichrichter 2 sowie eine Leistungsfaktor-Korrekturschaltung (PFC) 10 für mehrere Leuchtmittel-Betriebsgeräte 1, 1', 1" vorgesehen. Die Zentraleinheit 18 wird mit Wechselspannung 9 versorgt. Die Zentraleinheit 18 ist im übrigen auch räumlich von den Betriebsgeräten getrennt und kann bspw. zentral für einen Raum, eine Etage oder gar ein Gebäude in einem Schaltschrank etc. angeordnet sein.

Wie in Fig. 1 schematisch angedeutet, können die verschiedenen Leuchtmittel-Betriebsgeräte 1, 1', 1'' verschiedenste Leuchtmittel, wie beispielsweise eine Gasentladungslampe 5, Leuchtdioden 5', etc. ansteuern. Die Leuchtmittel können also mit DC- oder mit AC-Spannung betrieben werden, wobei in letzterem Fall in dem zugehörigen Betriebsgerät ein Wechselrichter vorgesehen ist.

Weiterhin können an den Ausgangskreis 11 der Zentraleinheit 18 auch andere (bspw. passive) lichttechnische oder Gebäudetechnische Einrichtungen, wie beispielsweise ein Lichtsensor 5'' oder ein Bewegungsmelder (nicht dargestellt) angeschlossen sein.

Je nach Natur der angeschlossenen Leuchtmittel 5, 5' bzw. Sensoren 5'' sind die Betriebsgeräte 1, 1', 1'' unterschiedlich ausgebildet. Für den Fall, dass die Gasentladungslampe 5 angesteuert werden soll, ist das entsprechende Betriebsgerät 3 bspw. als Vorschaltgerät mit einem Wechselrichter ausgebildet. Die Betriebsgeräte können in diesem Fall auch als "Ausgangs-Konverter" bezeichnet werden.

Die Spannungsversorgung der Betriebsgeräte und Leuchtmittel wie auch die uni- oder bidirektionale Kommunikation zwischen der Zentraleinheit und den lokalen Betriebsgeräten 1, 1', 1'' erfolgt über wenigstens einen DC-Ausgangskreis 11, 12. Wie in Fig. 1 schematisch dargestellt, kann dabei ein Ausgangskreis 11 busartig ausgestaltet sein, so dass ausgehend von diesem zentralen gemeinsamen Bus 11 die verschiedenen Betriebsgeräte 1, 1', 1'' über Stichleitungen 13, 13', 13'' versorgt werden. Alternativ oder zusätzlich können für einzelne Betriebsgeräte bzw. gemeinsam versorgte Gruppen an Betriebsgeräten individuelle Ausgangskreise 12 vorgesehen sein.

Dieser DC-Ausgangskreis 11, 12 hat den Vorteil, dass er im Vergleich zu entsprechenden AC-Kreisen gegenüber parasitären Effekten weniger anfällig ist.

An den DC-Ausgangskreis 11 bzw. 12 können Notlicht-Steuereinheiten 7 bzw. weitere Steuereinheiten 8 angeschlossen sein, wobei diese Einrichtungen auch Signale von den angeschlossenen Betriebsgeräten aus dem DC-Bus auslesen könne, wenn sie einen Powerline-Demodulator aufweisen.

Festzuhalten ist also, dass gemäß der vorliegenden Erfindung die Zentraleinheit 18 für mehrere Betriebsgeräte gemeinsam vorgesehen ist, wobei die Zentraleinheit mit den Betriebsgeräten mittels wenigstens eines DC-Ausgangskreises 11, 12 verbunden ist. Die Spannung auf dem Ausgangskreis 11 kann beispielsweise 400 Volt DC betragen.

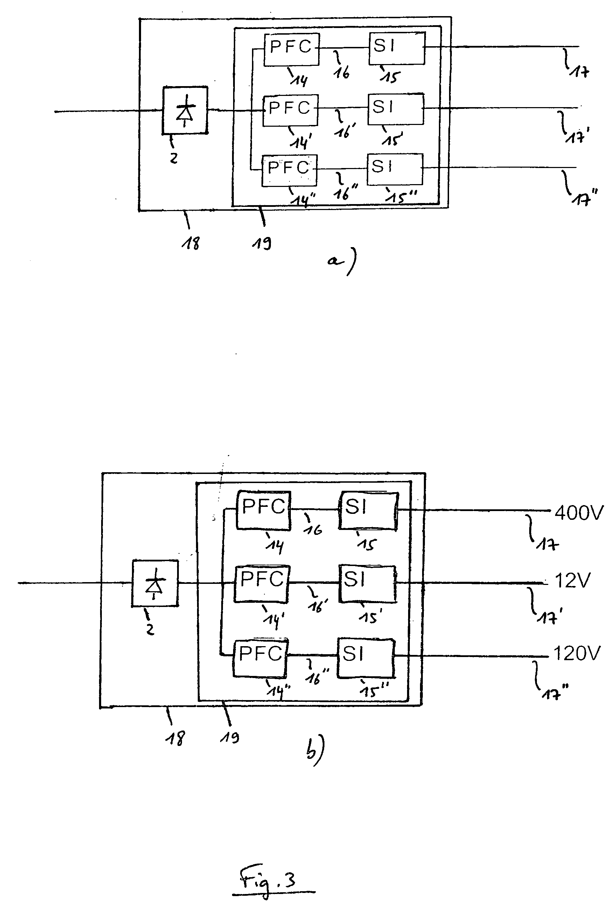

In Fig. 3 ist eine zentrale Versorgungseinheit 18 gemäss einer Ausführungsform der vorliegenden Erfindung gezeigt. Die zentrale Stromversorgungseinheit 18 besteht aus einem Gleichrichter 2 und einem mehrere PFCs aufweisenden zentralen kaskadierten AC/DC-Konverter 19.

Die in Fig. 3a abgebildete zentrale Versorgungseinheit 18 ist aus drei PFC-Einheiten 14, 14', 14'' und drei Sicherungs-Einheiten 15, 15', 15'' aufgebaut. Ferner sind die Leistungsfaktor-Korrekturschaltungen 14 14' 14'' parallel angeordnet. Die Zentraleinheit 18 weist soviel PFC-Einheiten auf wie Stränge 16, 16', 16'', so dass jeder einzelne Strang eine PFC-Einheit 14, 14', 14'' und anschließend eine Sicherungs-Einheit 15, 15', 15'' enthält.

Die elektronischen Ausgangs-Sicherungen 15, 15', 15'' dienen dazu, eine galvanische Trennung zwischen der Versorgungseinheit 18 und den jeweiligen Ausgängen 17, 17', 17'', die die DC-Ausgangskreise 11, 12 speisen, zu gewährleisten. Somit ist auch der zentrale kaskadierte AC/DC Konverter 19 von dem in den DC-Ausgangskreisen 11, 12 fließenden Strom abgekoppelt.

Erfindungsgemäß dient ein PFC-Modul 14'' als Redundant-Schaltung, so dass bei Bedarf ein anderes PFC-Modul ersetzen werden kann. Das Redundant-PFC-Modul 14'' übernimmt dann die Ausgang-Versorgung falls ein Modul 14, 14' des zentralen kaskadierten Konverters 19 ausfällt. Die Übernahme kann dabei entweder automatisch oder manuell erfolgen.

In Fig. 3b wird gezeigt, dass nach einer Ausführungsform der vorliegenden Erfindung eine Versorgungseinheit 18 eine Vielzahl von Ausgangsstufen anbietet. Die einzelnen Ausgangsstufen können dabei unterschiedliche Ausgangskreisen speisen. Die Ausgänge 17, 17', 17'' können daher unterschiedliche Ausgangsspannungen aufweisen, wie z.B. 400V, 12V und 120V.

Erfindungsgemäß sind die Module der Zentraleinheit 18 - einschließlich der oder die Redundant-Module -, die eine selbe Funktion ausführen, identisch und bspw. als Steckmodule ausgeführt. So werden z.B. die PFC-Schaltungen 14, 14', 14'' des zentralen kaskadierten AC/DC Konverters 19 als identisch angefertigte Steckmodule ausgeführt. Auf diese Weise, können diese Module ausgewechselt werden. Die Größe der zentralen Versorgungseinheit 18 richtet sich nach den Anforderungen pro Brandabschnitt bzw. dem Platzbedarf pro Unterverteiler und einer zweckmäßigen Verkabelung der Installation.

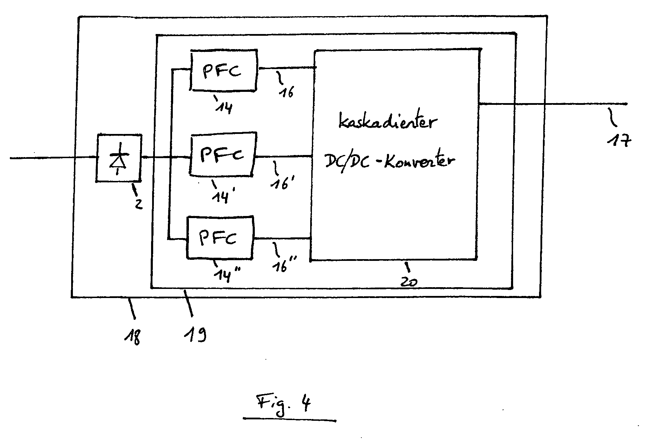

Die Fig. 4 zeigt eine weitere Ausführungsform der Erfindung. Die Zentraleinheit 18 ist aus einem Gleichrichter 2 und einem zentralen kaskadierten AC/DC-Konverter 19 aufgebaut. Innerhalb des zentralen kaskadierten Konverters 19 befinden sich drei Stränge 16, 16', 16''. An jeden Strang wird ein PFC-Modul 14, 14', 14'' angeschlossen. Außerdem, wie in Fig. 3 bereits erklärt, kann die Zentraleinheit 18 pro Strang auch noch ein Sicherungs-Modul 15, 15', 15'' besetzen.

Die PFC-Module werden an Eingänge eines kaskadierten DC/DC Konverters 20 angeschlossen, der wenigstens einen Ausgang 17 aufweist. Der kaskadierte DC/DC Konverter 20 beinhaltet mehrere Konverter-Module und kann durch unterschiedliche Einschaltzyklen und Ab- bzw. Zuschalten von Konverter-Modulen auf unterschiedliche Lastzustände reagieren.

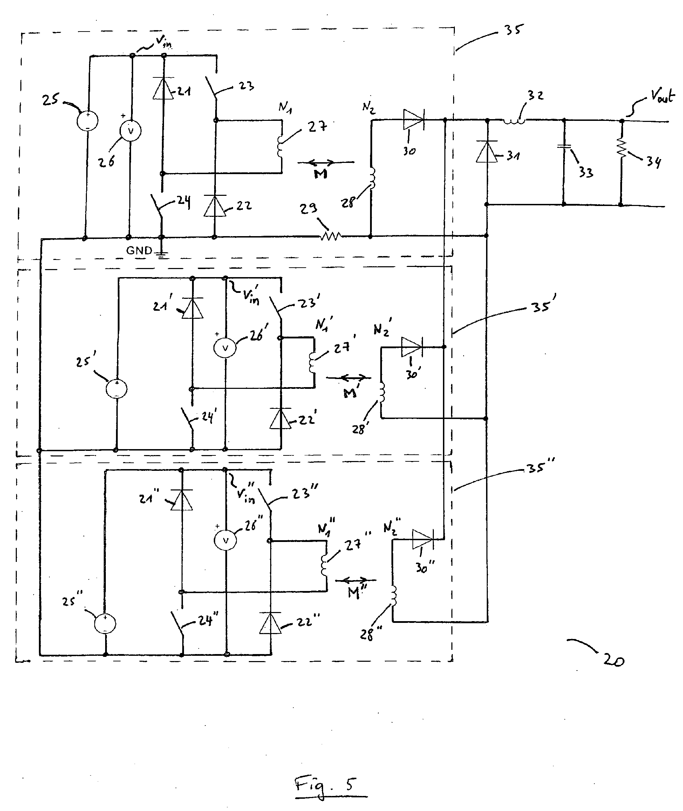

Gemäss der vorliegenden Erfindung zeigt die Fig. 5 eine Ausführungsform des kaskadierten DC/DC-Konverters 20 mit drei Konverter-Modulen 35, 35', 35''. Die drei Konverter sind erfindungsgemäß parallel geschaltet und können z. B. mit Halbbrücken-Durchflusswandler 35, 35', 35'' ausgeführt werden.

Folgende Beschreibung des Funktionsprinzips eines Konverter-Moduls 35 gilt auch für die anderen Konverter-Module 35', 35''.

Beide Schalter 23 und 24 werden mit einer pulsbreitenmodulierten Spannung gleichzeitig ein- und ausgeschaltet.

In der Einschaltphase der Schalter 23, 24 ist die Spannung einer Induktivität 27 gleich der Eingangsspannung $V_{in}$ des Konverter-Moduls 35. Die Induktivität 27 ist die Primärwicklung ($N_1$) eines Transformators 27, 28 und ist gleichsinnig mit der Sekundärwicklung 28 ($N_2$) des Transformators gewickelt, so dass in der leitenden Phase an der Induktivität 28 die Spannung $V_{28}=V_{in}*N_2/N_1$ anliegt. Diese Spannung $V_{28}$ lädt einen Ausgangskondensator 33 über eine Drossel 32.

Während der Abschaltphase der Schalter 23, 24 fließt kein Strom durch die Induktivität 27 und damit auch nicht durch die Induktivität 28. Die Speicherdrossel 32 zieht ihren Strom über die Freilaufdiode 31. Während dieser Abschaltphase muss auch der magnetische Fluss im Transformator 27, 28 abgebaut werden. Dies wird über die Primärwicklung des Transformators 27, 28 ausgeführt: der wird nämlich über die Induktivität 27 und die primärseitigen Diode 21, 22 gegen die Eingangsspannung $V_{in}$ entmagnetisiert.

Die Entmagnetisierung benötigt im wesentlichen so viel Zeit wie die Magnetisierung. Daher muss diese Abschaltphase der Schalter 23, 24 mindestens eben so lang dauern wie die Einschaltphase. Das maximale Tastverhältnis $t_1/T$ des Konverter-Moduls darf daher nicht höher als 50% sein, wobei $t_1$ und T die Dauer einer Einschaltphase bzw. einer gesamten Periode, i.e. zwei aufeinanderfolgen Ein- und Ausschaltphasen, darstellen.

Wird das Konverter-Modul 35 zyklisch ein- und ausgeschaltet und bleiben die Konverter 35' und 35'' ausgeschaltet, so ist die Spannung $V_{31}$ der Diode 31 eine pulsbreitenmodulierte Spannung, die zwischen den Werten Null und $V_{28}=V_{in}*N_2/N_1$ springt. Der nachfolgende Tiefpass, gebildet aus einer Drossel 32 und einem Ausgangskondensator 33, bildet mit der Spannung $V_{out}$ den Mittelwert dieser Spannung $V_{31}$.

Erfindungsgemäß zeigt Fig. 5 drei parallel geschaltete Konverter-Module 35, 35', 35'', die einen kaskadierten DC/DC Konverter 20 bilden. Die Konverter-Module werden ein- und ausgeschaltet durch die Steuerung der jeweiligen Dioden 23/24, 23'/24' und 23''/24''.

In einer Ausführungsform der Erfindung wird zu jedem Zeitpunkt höchstens ein Konverter-Modul eingeschaltet. Um das zu gewährleisten, wird jedem Konverter-Modul 35, 35', 35'' periodisch einen Zeitschlitz zugewiesen, worin er eingeschaltet werden darf.

Dazu können die drei Konverter-Module alternativ und in der selben Reihenfolge ein- und ausgeschaltet werden. Erfindungsgemäß werden die drei Konverter-Module nacheinander zyklisch ein- und ausgeschaltet, so dass jedem nacheinander einen Zeitschlitz $T_p$ zugewiesen wird, worin das jeweilige Modul angeschaltet werden darf. Die maximale Einschalt-Zeitdauer eines Konverter-Moduls beträgt also höchstens die Zeitdauer $T_p$. Danach dürfen für eine Zeit $2*T_p$ ausschließlich die zwei andere Module eingeschaltet werden. Daher kann das Tastverhältnis nicht höher als 33% sein, was die Entmagnetisierung der jeweiligen Transformatoren 27-28, 27'-28', 27''-28'' sichert.

Werden die Konverter-Module 35, 35', 35'' nacheinander ein-/ und ausgeschaltet, so kann die Spannung $V_{31}$ der Diode 31 je nach Zeitschlitz zwischen den folgenden Werten springen: Null und $V_{28}=V_{in}*N_2/N_1$, Null und $V_{28}'=V_{in}'*N_2'/N_1'$, oder Null und $V_{28}''=V_{in}''*N_2''/N_1''$. Da die Ausgangsspannung $V_{out}$ den Mittelwert der Spannung $V_{31}$ bildet, kann sie durch Änderung der Einschaltzeit-Dauer und durch Deaktivierung der jeweiligen Konverter-Module an unterschiedliche Lastzustände angepasst werden. Diese stellbare Ausgangsspannung ermöglicht auch eine zentrale Dimmung der angeschlossenen Lichtmittel.

Ein Konverter-Modul 35'' kann übrigens zur Redundanzbereitstellung dienen und die Versorgung der Ausgangsstufe übernehmen, falls ein Konverter-Modul 35, 35' ausfällt

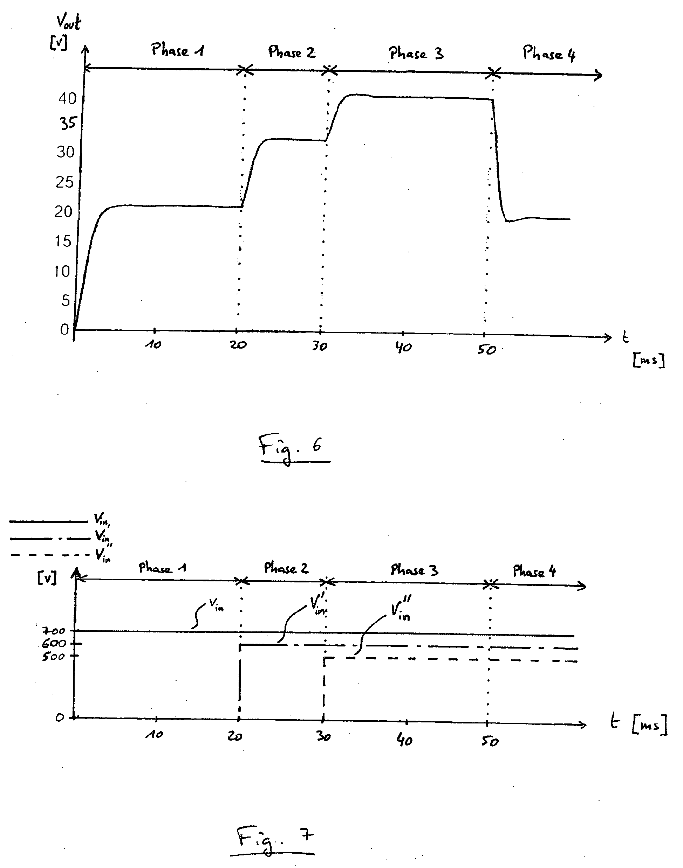

Fig. 6 ist ein Zeitdiagramm der Ausgangsspannung $V_{out}$ des kaskadierten DC/DC Konverters 20 und des Ausgangs 17 der Zentraleinheit 18. In den unterschiedlichen dargestellten Phasen werden unterschiedliche Konverter-Module 35, 35', 35'' aktiviert und unterschiedliche Tastverhältnisse benutzt. Nach einer Ausführungsform der Erfindung werden die Module 35, 35', 35'' mit dem selben Tastverhältnis ein- und ausgeschaltet.

In Phase 1 wird nur ein Modul 35 aktiviert. Das bedeutet, dass nur dieses ein-/ und ausgeschaltet und dabei die anderen Module ausgeschaltet bleiben. In Phase 2 und 3 werden jeweils zwei Module 35, 35' bzw. drei Module 35, 35', 35'' aktiviert. Wie ersichtlich wird, ist die Zentraleinheit 18 in der Lage, durch Aktivieren und Deaktivieren einzelner Module unterschiedliche Lastzustände zu kompensieren.

Die Phase 4 unterscheidet sich von den Phasen 1 bis 3, in dem die Zeitdauer $d_2$ einer Einschaltphase eines Moduls verändert wird. Eine Anpassung an den Lastzustand kann dadurch auch durch Änderung der Modul-Einschalt-Zeitdauer erfolgen.

In Fig. 7 werden die Eingangsspannungen des kaskadierten DC/DC Konverter 20 gezeigt, je nach Aktivierungs- und Deaktivierungs-Zustand der einzelnen Konverter-Module 35, 35', 35''. Die verschiedene Module weisen unterschiedliche Eingangs-Gleichspannungen auf, z.B. 700V, 600V und 500V. Ein Modul wird deaktiviert wenn seine Eingangsspannung auf Null gesetzt wird.

In Phase 1, 2 und 3 bleibt das Tastverhältnis konstant, so dass der Einfluss der Anzahl der aktivierten Module analysiert werden kann. In der ersten Phase 1 wird ein Modul 35 aktiviert. Demzufolge wird die Spannung $V_{31}$ der Diode 31 eine pulsbreitenmodulierte Spannung, die zwischen den Werten Null und $V_{28}=V_{in}*N_2/N_1$ springt. Die Ausgangsspannung $V_{out}$ bildet dann den Mittelwert dieser Spannung $V_{31}$. Für den kontinuierlichen Betrieb, bei dem der Strom durch die Drossel 32 nie Null wird, gilt daher:

$$V_{out/Phase\,1} = V_{in} \cdot \frac{N_2}{N_1} \cdot \frac{d_1}{T_P} \qquad (\text{Eq. 1})$$

wobei $d_1/T_p$ das Tastverhältnis des Ein- und Ausschalten eines Moduls bestimmt.

In Phase 2 wird außer dem Modul 35 noch das Modul 35' aktiviert. Da die Module nicht gleichzeitig eingeschaltet werden springt diesmal die Spannung $V_{31}$ zwischen den Werten Null, $V_{28}=V_{in}*N_2/N_1$ und $V_{28}'=V_{in}'*N_2'/N_1'$. Die Ausgangsspannung bildet dann dessen Mittelwert:

$$V_{out/Phase\,2} = \left( V_{in} \cdot \frac{N_2}{N_1} + V_{in}' \cdot \frac{N_2'}{N_1'} \right) \cdot \frac{d_1}{T_P} \qquad (\text{Eq. 2})$$

Beim Aktivieren von mehr oder weniger Konverter-Modulen, die mit unterschiedlichen Eingangsspannungen versorgt werden können, kann demzufolge der kaskadierte DC/DC-Konverter 20 mehrere verschiedene Ausgangsspan-

nungen $V_{out}$ anbieten. Somit kann sich die zentrale Versorgungseinheit 18 an die Last der angeschlossenen Leuchtmittel anpassen.

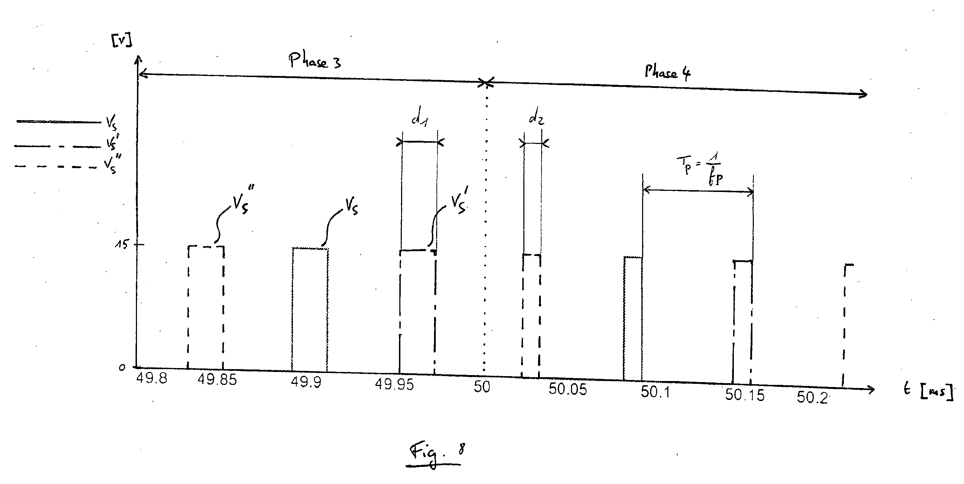

Fig. 8 zeigt ein Zeitdiagramm der Steuerspannungen $V_s$, $V_s$' und $V_s$'' der jeweiligen Module 35, 35', 35'' des kaskadierten DC/DC-Konverters 20. Die Konverter-Module werden erdiendungsgemäß zyklisch nacheinander ein- und ausgeschaltet, wobei zu jedem Zeitpunkt maximal nur eins eingeschaltet ist. Von Phase 3 zu Phase 4 wird nur die Einschalt-Zeitdauer der Konverter-Module von $d_1$ zu $d_2$ geändert. Diese Zeitdauer kann z.B. halbiert werden, so dass $d_2 = d_1/2$. Dies hat eine Auswirkung auf die Ausgangsspannung $V_{out}$ des kaskadierten DC/DC Konverters 20, die von dem Wert

$$V_{out/Phase\,3} = \left( V_{in} \cdot \frac{N_2}{N_1} + V_{in}' \cdot \frac{N_2'}{N_1'} + V_{in}'' \cdot \frac{N_2''}{N_1''} \right) \cdot \frac{d_1}{T_P} \qquad (\text{Eq. 3})$$

in Phase 3 zu dem Wert

$$V_{out/Phase\,4} = \left( V_{in} \cdot \frac{N_2}{N_1} + V_{in}' \cdot \frac{N_2'}{N_1'} + V_{in}'' \cdot \frac{N_2''}{N_1''} \right) \cdot \frac{d_2}{T_P} = V_{out/Phase\,3} \cdot \frac{d_2}{d_1} = V_{out/Phase\,3} \cdot \frac{1}{2}$$

$$(\text{Eq. 4})$$

in Phase 4 variiert (Fig. 5). Die Variierung der Ausgangsspannung zwischen den Phasen 3 und 4 ist in diesem Fall eine Halbierung und ist in Fig. 6 deutlich zu sehen.

Die Ausgangsspannungen $V_{out}$ kann somit auch durch Änderung der Einschalt-Zeitdauer $d_1$ der Module angepasst werden.

Gemäss einem weiteren Aspekt der Erfindung wird die Ausgangsspannungen $V_{out}$ durch Änderung der Taktfrequenz $f_P = 1/T_P$ angepasst.

Folgende Tabelle fasst die Bezugszeichen der Figuren zusammen:

| | |
|---|---|
| 1,1',1'' | Leuchtmittel-Betriebsgeräte |
| 2 | ein Gleichrichter |
| 3 | ein Betriebsgerät |
| 4 | ein Elektrolyt-Speicherkondensator |
| 5,5',5'' | Leuchtmittel, bzw. eine Gasentladungslampe, eine Leuchtdiode, ein Lichtsensor |
| 6 | ein HF-Wechselrichter-Ausgangskreis |
| 7 | eine Notlicht-Steuereinheit |
| 8 | Steuereinheiten |
| 9 | eine Wechselspannung |
| 10 | eine PFC |
| 11,12 | DC-Ausgangskreise |
| 13,13',13'' | Stichleitungen |
| 14,14',14'' | PFC-Module |
| 15,15',15'' | Sicherheits-Module |
| 16,16',16'' | Stränge der Zentraleinheit |
| 17,17',17'' | DC-Ausgänge der Zentraleinheit |
| 18 | eine Zentraleinheit |
| 19 | ein zentraler kaskadierter AC/DC Konverter |
| 20 | ein kaskadierter DC/DC Konverter |

(fortgesetzt)

| 21,21',21'' | Diode |
|---|---|
| 22,22',22'' | Diode |
| 23,23',23'' | Schalter |
| 24,24',24'' | Schalter |
| 26,26',26'' | Eingang eines Konverter-Moduls |
| 27,27',27'' | Induktivität, Primärwicklung eines Transformators |
| 28,28',28'' | Induktivität, Sekundärwicklung eines Transformators |
| 29 | ein Widerstand |
| 30,30',30'' | Diode |
| 31 | eine Freilaufdiode |
| 32 | eine Drossel |
| 33 | ein Ausgangskondensator |
| 34 | eine Last |
| 35,35',35'' | Konverter-Module |

**Patentansprüche**

1. Verfahren zur Steuerung von Leuchtmittel-Betriebsgeräten (1, 1', 1'') mittels einer zentralen Gleichrichter/Power Factor Correction (PFC)-Einheit als Zentraleinheit(18), die mittels wenigstens eines DC-Ausgangskreises (11) die Leuchtmittel-Betriebsgeräte (1, 1', 1'') versorgt, wobei der DC-Ausgangskreis (11) eine uni- oder bidirektionale Kommunikation zwischen der Zentraleinheit (18) und den Leuchtmittel-Betriebsgeräten (1, 1', 1'') ermöglicht,
**dadurch gekennzeichnet,**
**dass** die Zentraleinheit (18) zur Lastanpassung des DC-Ausgangskreises (11) einen zentralen kaskadierten AC/DC Konverter (19) aufweist, der aus mehreren parallel geschalteten PFC-Modulen (14, 14', 14'') aufgebaut ist, denen ein Gleichrichter (2) vorgeschaltet ist.

2. Verfahren nach Anspruch 1,
**dadurch gekennzeichnet,**
**dass** die PFC-Module (14, 14', 14'') wenigstens einen kaskadierten DC/DC Konverter (20) speisen, der aus unterschiedlich miteinander kombinierten Konverter-Modulen (35, 35', 35'') besteht und unterschiedliche Ausgangsspannungen bereitstellt.

3. Verfahren nach Anspruch 2,
**dadurch gekennzeichnet,**
**dass** wenigstens einer der kaskadierten DC/DC Konverter (20) zur zentralen Dimmung der Leuchtmittel-Betriebsgeräte eingesetzt wird.

4. Verfahren nach Anspruch 2,
**dadurch gekennzeichnet,**
**dass** wenigstens zwei Konverter-Module (35, 35', 35'') parallel geschaltet sind.

5. Verfahren nach Anspruch 2,
**dadurch gekennzeichnet,**
**dass** die einzelne Konverter-Module (35, 35', 35'') unterschiedliche Eingangs-Spannungen aufweisen.

6. Verfahren nach Anspruch 2,
**dadurch gekennzeichnet,**
**dass** die einzelne Konverter-Module (35, 35', 35'') aktiviert und deaktiviert werden.

**7.** Verfahren nach Anspruch 2,
**dadurch gekennzeichnet,**
**dass** die Einschalt-Zeitdauer und/oder die Einschalt-Frequenz der einzelnen Konverter-Module (35, 35', 35") stellbar ist.

**8.** Verfahren nach Anspruch 2,
**dadurch gekennzeichnet,**
**dass** die PFC-Module (14, 14', 14") bzw. die Konverter-Module (35, 35', 35") identisch sind und als Steckmodule ausgeführt sind.

**9.** Verfahren nach Anspruch 2,
**dadurch gekennzeichnet,**
**dass** wenigstens ein parallel geschaltetes Konverter-Modul (35, 35', 35") und/oder wenigstens ein parallel geschaltetes PFC-Modul (14, 14', 14") als Redundant-Modul dient.

**10.** Verfahren nach Anspruch 2,
**dadurch gekennzeichnet,**
**dass** pro Strang (16, 16', 16") ein PFC-Modul (14, 14', 14") und ein Sicherungs-Modul (15, 15', 15") in der Zentraleinheit (18) vorgesehen sind.

**11.** Steuersystem für Leuchtmittel-Betriebsgeräte (1, 1', 1") und Leuchtmittel-Betriebsgeräte (1, 1', 1"),
wobei das Steuersystem eine zentrale Gleichrichter/Power Factor Correction (PFC) -Einheit als Zentraleinheit (18) aufweist, die mittels wenigstens eines DC-Ausgangskreises (11) die Leuchtmittel-Betriebsgeräte (1, 1', 1") versorgt, wobei der DC-Ausgangskreis (11) eine uni- oder bidirektionale Kommunikation zwischen der Zentraleinheit (18) und den Leuchtmittel-Betriebsgeräten (1, 1', 1") ermöglicht,
**gekennzeichnet durch**
einen zentralen kaskadierten AC/DC Konverter (19) aufweisend mehrere parallel geschalteten PFC-Module (14, 14', 14") zur Lastanpassung des DC-Ausgangskreises (11) in der Zentraleinheit (18), denen ein Gleichrichter (2) vorgeschaltet ist.

**12.** Steuersystem für Leuchtmittel-Betriebsgeräte und Leuchtmittel-Betriebsgeräte nach Anspruch 11,
**dadurch gekennzeichnet,**
**dass** wenigstens einer der aus unterschiedlich miteinander kombinierten Konverter-Modulen (35, 35', 35") aufgebauten kaskadierten DC/DC Konverter (20) von den PFC-Modulen (14, 14', 14") gespeist wird.

**13.** Steuersystem für Leuchtmittel-Betriebsgeräte und Leuchtmittel-Betriebsgeräte nach Anspruch 12,
**dadurch gekennzeichnet,**
**dass** die kaskadierten DC/DC Konverter (20) unterschiedliche Ausgangsspannungen bereitstellen.

**14.** Steuersystem für Leuchtmittel-Betriebsgeräte und Leuchtmittel-Betriebsgeräte nach Anspruch 12,
**dadurch gekennzeichnet,**
**dass** wenigstens einer der kaskadierten DC/DC Konverter (20) zur zentralen Dimmung der Leuchtmittel-Betriebsgeräten eingesetzt wird.

**15.** Steuersystem für Leuchtmittel-Betriebsgeräte und Leuchtmittel-Betriebsgeräte nach Anspruch 12,
**dadurch gekennzeichnet,**
**dass** wenigstens zwei Konverter-Module (35, 35', 35") parallel geschaltet sind.

**16.** Steuersystem für Leuchtmittel-Betriebsgeräte und Leuchtmittel-Betriebsgeräte nach Anspruch 12,
**dadurch gekennzeichnet,**
**dass** die einzelne Konverter-Module (35, 35', 35") unterschiedliche Eingangs-Spannungen aufweisen.

**17.** Steuersystem für Leuchtmittel-Betriebsgeräte und Leuchtmittel-Betriebsgeräte nach Anspruch 12,
**dadurch gekennzeichnet,**
**dass** die einzelnen Konverter-Module (35, 35', 35") eine stellbare Einschalt-Zeitdauer und/oder Einschalt-Frequenz aufweisen.

**18.** Steuersystem für Leuchtmittel-Betriebsgeräte und Leuchtmittel-Betriebsgeräte nach Anspruch 12,

**dadurch gekennzeichnet,**
**dass** die PFC-Module (14, 14', 14") bzw. die Konverter-Module (35, 35', 35") identisch sind und als Steckmodule ausgeführt sind.

19. Steuersystem für Leuchtmittel-Betriebsgeräte und Leuchtmittel-Betriebsgeräte nach Anspruch 12,
**dadurch gekennzeichnet,**
**dass** wenigstens ein parallel geschaltetes Konverter-Modul (35, 35', 35") und/oder wenigstens ein parallel geschaltetes PFC-Modul (14, 14', 14") als Redundant-Modul dient.

20. Steuersystem für Leuchtmittel-Betriebsgeräte und Leuchtmittel-Betriebsgeräte nach Anspruch 12,
**dadurch gekennzeichnet,**
**dass** ein PFC-Modul (14, 14', 14") und ein Sicherungs-Modul (15, 15', 15") pro Zentraleinheits-Strang (16, 16', 16") vorgesehen sind.

**Claims**

1. A method for the control of operating devices for lighting means (1, 1', 1") by means of a central rectifier/power factor correction (PFC)-unit as central unit (18), which by means of at least one DC-output circuit (11) supplies the operating devices for lighting means (1, 1', 1"), wherein the DC-output circuit (11) enables a uni- or bi-directional communication between the central unit (18) and the operating devices for lighting means (1, 1', 1"),
**characterized in**
**that** the central unit (18) comproses for load adaptation of the DC-output circuit (11) a central cascaded AC/DC converter (19), which is made up of several PFC-modules (14, 14', 14") connected in parallel, to which a rectifier (2) is upstream.

2. A method according to Claim 1,
**characterized in**
**that** the PFC-module (14, 14', 14") supplies at least one cascaded DC/DC converter (20), which consists of converter-modules (35, 35', 35") combined differently with each other and provides different output voltages.

3. A method according to Claim 2,
**characterized in**
**that** at least one of the cascaded DC/DC converters (20) is used for the central dimming of the operating devices for lighting means.

4. A method according to Claim 2,
**characterized in**
**that** at least two converter modules (35, 35', 35") are connected in parallel.

5. A method according to Claim 2
**characterized in**
**that** the individual converter modules (35, 35', 35") have different input voltages.

6. A method according to Claim 2,
**characterized in**
**that** the individual converter-modules (35, 35', 35") are activated and deactivated.

7. A method according to Claim 2,
**characterized in**
**that** the switch-on-duration and/or the switch-on-frequency of the individual converter modules (35, 35', 35") is adjustable.

8. A method according to Claim 2,
**characterized in**
**that** the PFC-modules (14, 14', 14") or the converter-modules (35, 35', 35") are identical and are designed as plug-in modules.

9.  A method according to Claim 2,
    **characterized in**
    **that** at least one converter-module (35, 35', 35") connected in parallel and/or at least one PFC-module (14, 14', 14") connected in parallel serves as a redundant-module.

10. A method according to Claim 2,
    **characterized in**
    **that** one PFC-module (14, 14', 14") and one security-module (15, 15', 15") are provided per string (16, 16', 16") in the central unit (18).

11. A control system for operating devices for lighting means (1, 1', 1") and operating devices for lighting means (1, 1', 1"), wherein the control system has a central rectifier/power factor correction (PFC)-unit as central unit (18), which supplies the operating devices for lighting means (1, 1', 1") by means of at least one DC-output circuit (11), wherein the DC-output circuit (11) enables a uni- or bi-directional communication between the central unit (18) and the operating devices for lighting means (1, 1', 1"),
    **characterized by**
    a central cascaded AC/DC converter (19) having several PFC-modules (14, 14', 14") connected in parallel for load adaptation of the DC output circuit (11) in the central unit (18), to which a rectifier (2) is upstream.

12. A control system for operating devices for lighting means and operating devices for lighting means according to Claim 11,
    **characterized in**
    **that** at least one of the cascaded DC/DC converters (20) made up of converter-modules (35, 35', 35") combined differently with each other are supplied by the PFC-modules (14, 14', 14").

13. A control system for operating devices for lighting means and operating devices for lighting means according to Claim 12,
    **characterized in**
    **that** the cascaded DC/DC converters (20) provide different output voltages.

14. A control system for operating devices for lighting means and operating devices for lighting means according to Claim 12,
    **characterized in**
    **that** at least one of the cascaded DC/DC converters (20) is used for the central dimming of the operating devices for lighting means.

15. A control system for operating devices for lighting means and operating devices for lighting means according to Claim 12,
    **characterized in**
    **that** at least two converter-modules (35, 35', 35") are connected in parallel.

16. A control system for operating devices for lighting means and operating devices for lighting means according to Claim 12,
    **characterized in**
    **that** the individual converter-modules (35, 35', 35") have different input voltages.

17. A control system for operating devices for lighting means and operating devices for lighting means according to Claim 12,
    **characterized in**
    **that** the individual converter-modules (35, 35', 35") have an adjustable switch-on-duration and/or switch-on-frequency.

18. A control system for operating devices for lighting means and operating devices for lighting means according to Claim 12,
    **characterized in**
    **that** the PFC-modules (14, 4', 14") or the converter-modules (35, 35', 35") are identical and are designed as plug-in modules.

**19.** A control system for operating devices for lighting means and operating devices for lighting means according to Claim 12,
**characterized in**
**that** at least one converter-module (35, 35', 35") connected in parallel and/or at least one PFC-module (14, 14', 14") connected in parallel serves as a redundant-module.

**20.** A control system for operating devices for lighting means and operating devices for lighting means according to Claim 12,
**characterized in**
**that** a PFC-module (14, 14', 14") and a security module (15, 15', 15") are provided per central unit-string (16, 16', 16").

**Revendications**

**1.** Procédé pour la commande d'appareils de fonctionnement (1, 1', 1") d'émetteurs de lumière, à l'aide d'une unité centrale redresseur/Power Factor Correction (PFC) (amélioration du facteur de puissance) servant d'unité centrale (18), qui à l'aide d'au moins un circuit de sortie en courant continu (11) alimente les appareils de fonctionnement (1, 1', 1") de l'émetteur de lumière, le circuit de sortie (11) en courant continu permettant une communication uni- ou bidirectionnelle entre l'unité centrale (18) et les appareils de fonctionnement (1, 1', 1") d'émetteurs de lumière, **caractérisé en ce que** l'unité centrale (18) comprend, pour adaptation de la charge du circuit de sortie (11) en courant continu, un convertisseur alternatif/continu central (19) monté en cascade, qui est constitué de plusieurs modules PFC (14, 14', 14") montés en parallèle, en amont desquels est monté un redresseur (2).

**2.** Procédé selon la revendication 1, **caractérisé en ce que** le module PFC (14, 14', 14") alimente au moins un convertisseur continu/continu (20) monté en cascade, qui est constitué de modules convertisseurs (35, 35', 35") différemment combinés les uns aux autres, et fournit différentes tensions de sortie.

**3.** Procédé selon la revendication 2, **caractérisé en ce qu'**au moins l'un des convertisseurs continu/continu (20) montés en cascade est utilisé pour une variation centrale de lumière des appareils de fonctionnement d'émetteurs de lumière.

**4.** Procédé selon la revendication 2, **caractérisé en ce qu'**au moins deux modules convertisseurs (35, 35', 35") sont montés en parallèle.

**5.** Procédé selon la revendication 2, **caractérisé en ce que** les différents modules convertisseurs (35, 35', 35") présentent des tensions d'entrée différentes.

**6.** Procédé selon la revendication 2, **caractérisé en ce que** les différents modules convertisseurs (35, 35', 35") subissent une activation et une désactivation.

**7.** Procédé selon la revendication 2, **caractérisé en ce que** la durée d'enclenchement et/ou la fréquence d'enclenchement des différents modules convertisseurs (35, 35', 35") sont réglables.

**8.** Procédé selon la revendication 2, **caractérisé en ce que** respectivement les modules PFC (14, 14', 14") et les modules convertisseurs (35, 35', 35") sont identiques et sont réalisés sous forme de modules enfichables.

**9.** Procédé selon la revendication 2, **caractérisé en ce qu'**au moins un module convertisseur (35, 35', 35") monté en parallèle et/ou au moins un module PFC (14, 14', 14") monté en parallèle sert de module redondant.

**10.** Procédé selon la revendication 2, **caractérisé en ce qu'**il est prévu par branche (16, 16', 16") un module PFC (14, 14', 14") et un module coupe-circuit (15, 15', 15") dans l'unité centrale (18).

**11.** Système de commande pour des appareils de fonctionnement (1, 1', 1") d'émetteurs de lumière, et appareils de fonctionnement (1, 1', 1") d'émetteurs de lumière, le système de commande comprenant en tant qu'unité centrale (18) une unité centrale redresseur/Power Factor Correction (PFC) (amélioration du facteur de puissance), qui à l'aide d'au moins un circuit de sortie (11) en courant continu alimente les appareils de fonctionnement (1, 1', 1") d'émetteurs de lumière, le circuit de sortie (11) en courant continu permettant une communication uni- ou bidirectionnelle entre l'unité centrale (18) et les appareils de fonctionnement (1, 1', 1") d'émetteurs de lumière, **caractérisé**

**par** un convertisseur alternatif/continu central (19) monté en cascade, comprenant plusieurs modules PFC (14, 14', 14") montés en parallèle pour adaptation de la charge du circuit de sortie (11) en courant continu dans l'unité centrale (18), en amont duquel est monté un redresseur (2).

**12.** Système de commande pour des appareils de fonctionnement d'émetteurs de lumière, et appareils de fonctionnement d'émetteurs de lumière selon la revendication 11, **caractérisés en ce qu'**au moins l'un des convertisseurs continu/continu (20) montés en cascade, constitués de modules convertisseurs (35, 35', 35") différemment combinés les uns aux autres, est alimenté par des modules PFC (14, 14', 14").

**13.** Système de commande pour des appareils de fonctionnement d'émetteurs de lumière, et appareils de fonctionnement d'émetteurs de lumière selon la revendication 12, **caractérisés en ce que** les convertisseurs continu/continu (20) montés en cascade fournissent différentes tensions de sortie.

**14.** Système de commande pour des appareils de fonctionnement d'émetteurs de lumière, et appareils de fonctionnement d'émetteurs de lumière selon la revendication 12, **caractérisés en ce qu'**on utilise au moins l'un des convertisseurs continu/continu (20) montés en cascade pour une variation de lumière centrale des appareils de fonctionnement d'émetteurs de lumière.

**15.** Système de commande pour des appareils de fonctionnement d'émetteurs de lumière, et appareils de fonctionnement d'émetteurs de lumière selon la revendication 12, **caractérisés en ce qu'**au moins deux modules convertisseurs (35, 35', 35") sont montés en parallèle.

**16.** Système de commande pour des appareils de fonctionnement d'émetteurs de lumière, et appareils de fonctionnement d'émetteurs de lumière selon la revendication 12, **caractérisés en ce que** les différents modules convertisseurs (35, 35', 35") présentent différentes tensions d'entrée.

**17.** Système de commande pour des appareils de fonctionnement d'émetteurs de lumière, et appareils de fonctionnement d'émetteurs de lumière selon la revendication 12, **caractérisés en ce que** les différents modules convertisseurs (35, 35', 35") présentent une durée d'enclenchement réglable et/ou une fréquence d'enclenchement réglable.

**18.** Système de commande pour des appareils de fonctionnement d'émetteurs de lumière, et appareils de fonctionnement d'émetteurs de lumière selon la revendication 12, **caractérisés en ce que** respectivement les modules PFC (14, 14', 14") et les modules convertisseurs (35, 35', 35") son- identiques et sont réalisés sous forme de modules enfichables.

**19.** Système de commande pour des appareils de fonctionnement d'émetteurs de lumière, et appareils de fonctionnement d'émetteurs de lumière selon la revendication 12, **caractérisés en ce qu'**au moins un module convertisseur (35, 35', 35") monté en parallèle et/ou au moins un module PFC (14, 14', 14") monté en parallèle sert de module redondant.

**20.** Système de commande pour des appareils de fonctionnement d'émetteurs de lumière, et appareils de fonctionnement d'émetteurs de lumière selon la revendication 12, **caractérisés en ce qu'**il est prévu par branche de l'unité centrale (16, 16', 16") un module PFC (14, 14', 14") et un module coupe-circuit (15, 15', 15").

Fig. 1

EP 1 583 402 B1

Fig. 2

a)

b)

Fig. 3

PFC  
16  
14  
PFC  
16'  
14'  
PFC  
16''  
14''  
2  
kaskadierter  
DC/DC - Konverter  
17  
20  
18  19

Fig. 4

Fig. 5

Fig. 6

Fig. 7

Fig. 8

EP 1 583 402 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03102890 A2
- US 20030142060 A1
- WO 0230828 A
- US 20020171379 A1